# EUROPEAN PATENT APPLICATION

(11) **EP 4 815 186 A2**
(43) Date of publication of application: **30.09.2026**
(21) Application number: 26198518.8
(22) Date of filing: 13.02.2023
(51) Int. Cl.: H01M 50/593

(54) **ELECTRODE STRUCTURE AND PRISMATIC BATTERY COMPRISING ELECTRODE STRUCTURE**

(30) Priority: 14.02.2022 KR 20220018632
(62) Document number(s) of the earlier application(s) in accordance with Art. 76 EPC: 23753247.8 / 4 310 968
(71) Applicant: LG Energy Solution, Ltd., Seoul 07335 (KR)
(72) Inventor: BOK, Cheon Hee, 34122 Daejeon (KR); LEE, Jin Soo, 34122 Daejeon (KR); SUNG, Joo Hwan, 34122 Daejeon (KR); JUNG, Kyung Hwan, 34122 Daejeon (KR)
(74) Representative: Goddar, Heinz J.

(57) **Abstract**

The disclosed technology relates to an electrode structure including a pair of stack type electrode assemblies, and to a prismatic battery including the prismatic structure. Such prismatic batteries are applicable to prismatic secondary batteries of various form factors and have good dimensional stability.

## Description

### TECHNICAL FIELD

The present invention relates to a prismatic battery, and particularly, to a prismatic battery including one pair of stack type electrode assemblies.

This application claims the benefit of priority based on Korean Patent Application No. 10-2022-0018632 filed on February 14, 2022, and all contents disclosed in the literature of the Korean Patent Application are included as part of this specification.

### BACKGROUND ART

Secondary batteries are rechargeable unlike primary batteries, and due to the possibility of a compact size and a high capacity, a lot of research on secondary batteries is being carried out. Due to technology development and an increase in demand for mobile devices and also due to electric vehicles and energy storage systems that are emerging in line with the needs of the times for environmental protection, the demand for secondary batteries as energy sources is more rapidly increasing.

Secondary batteries are classified into coin type batteries, cylindrical type batteries, prismatic type batteries, and pouch type batteries according to a shape of a prismatic battery housing. In such a secondary battery, an electrode assembly mounted in a prismatic battery housing is a chargeable and dischargeable power generating device having a structure in which electrodes and a separator are stacked.

An electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack type electrode assembly in which a plurality of positive and negative electrodes with a separator interposed therebetween are sequentially stacked, and a stack/folding type electrode assembly in which stack type unit cells are wound with a separation film having a long length.

A jelly-roll type electrode assembly is usually used in a prismatic secondary battery. However, as the size and capacity of a prismatic secondary battery have recently increased, various problems have arisen in applying a jelly-roll type electrode assembly. That is, in order to manufacture a jelly-roll electrode assembly, a device dedicated for winding is required, and in order to increase the size of an electrode assembly, a new winding device should be provided accordingly. Since the new winding device is a factor that increases manufacturing costs, an existing prismatic secondary battery uses a method of increasing the number of jelly-roll electrode assemblies and encapsulating the jelly-roll electrode assemblies in a prismatic battery housing. However, there are disadvantages in that assemblability is lowered and a separate electric wire should be added. As a result, there is a problem in that a jelly-roll electrode assembly is not suitable for responding to various form factors.

In addition, when the size of a jelly-roll electrode assembly increases, winding quality is degraded, and a jelly-roll is expanded or dented during use of a secondary battery, which adversely affects the safety of the secondary battery.

In addition, a space for electrical connection of a jelly-roll electrode assembly and a small amount of free space due to a required injection amount of an electrolyte are formed in a prismatic battery housing, and thus, a phenomenon (slip phenomenon) occurs in which the electrode assembly in the prismatic battery housing shakes or slides due to an external impact. When a slip phenomenon occurs in the electrode assembly, there may be various problems in that a short circuit occurs due to electrical contact or an electrode tab is torn due to stress concentration on the electrode tab.

### [Related Art Documents]

(Patent document 1) Korean Patent Publication No. 10-2019-0102816 (published on September 4, 2019)

### SUMMARY OF THE INVENTION

### TECHNICAL PROBLEM

The present invention is directed to solving various problems that arise in a conventional jelly-roll type electrode assembly as the size and capacity of a prismatic secondary battery increase.

The present invention is also directed to improving the safety of a prismatic secondary battery by suppressing an electrode assembly accommodated inside the prismatic secondary battery from slipping due to an external disturbance.

However, the technical objects to be solved by the present invention are not limited to the above-described objects, and other objects that are not described herein will be clearly understood by those skilled in the art from the following descriptions of the present invention.

### TECHNICAL SOLUTION

According to a first aspect of the present invention, an electrode structure provided by the present invention includes: a first electrode assembly; a second electrode assembly; and a current collector plate including a positive electrode terminal and a negative electrode terminal, wherein each of the first electrode assembly and the second electrode assembly includes a plurality of unit cells, each of the plurality of unit cells including a positive electrode and a negative electrode, and a separator between the positive electrode and the negative electrode, wherein the positive electrode includes a positive electrode tab and a dummy positive electrode tab, and the negative electrode includes a negative electrode tab and a dummy negative electrode tab, wherein the positive electrode tabs and negative electrode tabs are disposed on a first side of the plurality of unit cells, it the positive electrodes of the first electrode assembly and the second electrode assembly are electrically connected to the positive electrode terminals, and the negative electrodes of the first electrode assembly and the second electrode assembly are electrically connected to the negative electrode terminals, wherein the dummy positive electrode tab and the dummy negative electrode tab are disposed on a side other than a first side of the plurality of unit cells.

The number of unit cells of the first electrode assembly may be the same as the number of unit cells of the second electrode assembly.

The first electrode assembly and the second electrode assembly may be folded toward the current collector plate with the positive electrode terminal and the negative electrode terminal as a center.

The first electrode assembly and the second electrode assembly may further include a half cell having a positive electrode or a negative electrode above a separator.

According to a second aspect of the present invention, an electrode structure provided by the present invention includes: an above-described electrode structure according; a prismatic battery housing having an opening to receive the electrode structure; and an electrolyte, wherein the current collector plate seals the opening in the prismatic battery housing.

The dummy negative electrode tab may be electrically insulated with respect to the positive electrode and negative electrode terminals of the current collector plate.

The dummy positive electrode tab and the dummy negative electrode tab may be fixed to the prismatic battery housing to support the first and second electrode assemblies.

Both the dummy positive electrode tab and the dummy negative electrode tab may be disposed on opposite sides of the first side of the plurality of unit cells.

The dummy positive electrode tab and the dummy negative electrode tab may be fixed to the inner surface of the prismatic battery housing.

A pair of the positive electrode tab and the dummy positive electrode tab and a pair of the negative electrode tab and the dummy negative electrode tab may be each aligned to be positioned on the straight line in the height direction of the prismatic battery housing.

A pair of the positive electrode tab and the dummy positive electrode tab and a pair of the negative electrode tab and the dummy negative electrode tab may each disposed to be misaligned with respect to a straight line in a height direction of the prismatic battery housing.

For example, a pair of the positive electrode tab and the dummy negative electrode tab and a pair of the negative electrode tab and the dummy positive electrode tab may each aligned to be positioned on the straight line in the height direction of the prismatic battery housing.

Any one dummy tab of the dummy positive tab and the dummy negative tab may be electrically insulated from the prismatic battery housing.

Any one dummy tab electrically insulated from the prismatic battery housing may have a polarity opposite to that of the prismatic battery housing.

Any one dummy tab electrically insulated from the prismatic battery housing may be fixed to an insulator installed on an inner surface of the prismatic battery housing.

The insulator may include a tab insertion groove, and any one dummy tab electrically insulated from the prismatic battery housing may be inserted into and fixed to the tab insertion groove.

A dummy tab that is not electrically insulated from the prismatic battery housing may be welded to an inner surface of the prismatic battery housing.

A polarity of the prismatic battery housing may be neutral, and the dummy positive electrode tab and the dummy negative electrode tab may each be electrically insulated from the prismatic battery housing.

The dummy positive electrode tab and the dummy negative electrode tab may be fixed to an insulator installed on an inner surface of the prismatic battery housing.

The insulator may include a tab insertion groove, and the dummy positive electrode tab and the dummy negative electrode tab may each be inserted into and fixed to the tab insertion groove.

According to a third aspect of the present invention, a device provided by the present invention is a device including an above-described secondary battery, wherein the device is an electric vehicle.

### ADVANTAGEOUS EFFECTS

By using a stack type electrode assembly, a prismatic secondary battery having the above configuration of the present invention can respond flexibly to various form factors of a prismatic secondary battery that follows the trend of a large size and high capacity, and since a shape of the stack type electrode assembly is maintained well during use thereof, excellent quality can be secured even in terms of safety.

In addition, when a prismatic secondary battery using a conventional jelly-roll type electrode assembly is charged and discharged, deformation such as thickness expansion occurs in some areas of a jelly roll, but according to the present invention, it is possible to effectively solve a problem in that the dimensional stability of a module/pack is lowered due to the nonuniformity of the thickness expansion.

Furthermore, in a prismatic secondary battery of the present invention, an electrode assembly includes a dummy positive electrode tab and a dummy negative electrode tab at a side facing that of a positive electrode tab and a negative electrode tab, and the dummy positive electrode tab and the dummy negative electrode tab are fixed to a prismatic battery housing. As a result, the electrode assembly is fixed inside the prismatic battery housing in two directions, and thus a support structure is improved. Accordingly, a slip phenomenon of the electrode assembly accommodated inside the prismatic secondary battery is suppressed during use, thereby preventing various problems such as a short circuit due to electrical contact or tearing of tabs to considerably improve the safety of a secondary battery.

However, the technical effects obtainable through the present invention are not limited to the above-described effects, and other effects that are not described herein will be clearly understood by those skilled in the art from the following descriptions of the present invention.

### BRIEF DESCRIPTION OF THE DRAWINGS

The accompanying drawings illustrate exemplary embodiments of the present invention and, together with the following detailed description, serve to provide further understanding of the technical spirit of the present invention. However, the present invention is not to be construed as being limited to the drawings.
FIG. 1 is a view illustrating an example of a conventional jelly-roll type electrode structure.
FIG. 2 is a view illustrating another example of a conventional jelly-roll type electrode structure.
FIG. 3 is a view illustrating a stack type electrode structure according to one embodiment of the present invention.
FIG. 4 is a view illustrating a stack type electrode structure according to another embodiment of the present invention.
FIG. 5 is a view illustrating an example of a prismatic secondary battery including a stack type electrode structure according to the present invention.
FIG. 6 is a view illustrating a stack type electrode structure according to still another embodiment of the present invention.
FIGS. 7 to 9 are views illustrating various arrangement structures of a dummy positive electrode tab and a dummy negative electrode tab.
FIG. 10 is a view illustrating one example of a support structure of an electrode assembly in the prismatic secondary battery of the present invention.
FIG. 11 is a view illustrating another example of a support structure of an electrode assembly in the prismatic secondary battery of the present invention.

### EXAMPLES FOR CARRYING OUT THE INVENTION

While the present invention may be variously changed and have various embodiments, specific embodiments will be described in detail below.

However, it is to be understood that the present invention is not limited to the specific embodiments but includes all modifications, equivalents, and substitutions included in the spirit and the scope of the present invention.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

Also, when a portion such as a layer, a film, an area, a plate, etc. is referred to as being "on" another portion, this includes not only the case where the portion is "directly on" another portion but also the case where still another portion is interposed therebetween. On the other hand, when a portion such as a layer, a film, an area, a plate, etc. is referred to as being "under" another portion, this includes not only the case where the portion is "directly under" another portion but also the case where still another portion is interposed therebetween. In addition, to be disposed "on" in the present application may include the case disposed at the bottom as well as the top.

The present invention relates to an electrode structure. In one example, the electrode structure includes first and second electrode assemblies in which unit cells including a positive electrode and a negative electrode with a separator interposed therebetween are stacked vertically and a positive electrode tab and a negative electrode tab of each unit cell are disposed on the same side, and a current collector plate including a positive electrode terminal and a negative electrode terminal. Each of the first and second electrode assemblies may further include a half cell having a positive electrode and a negative electrode above a separator.

Here, the positive electrode tab and the negative electrode tab of the first electrode assembly are disposed to face the positive electrode tab and the negative electrode tab of the second electrode assembly with the current collector plate interposed therebetween, and the positive electrode tab and the negative electrode tab of each of the first and second electrode assemblies are coupled to the positive electrode terminal and the negative electrode terminal of the current collector plate.

As described above, by using a stack type electrode assembly, a prismatic secondary battery of the present invention can respond flexibly to various form factors of a prismatic secondary battery that follows the trend of a large size and high capacity, and since a shape of the stack type electrode assembly is maintained well during use thereof, it is possible to solve various disadvantages of a conventional jelly-roll type electrode assembly.

### EXAMPLES FOR CARRYING OUT THE INVENTION

Hereinafter, an electrode structure of the present invention and a prismatic secondary battery including the same will be described in detail with reference to the accompanying drawings. For reference, front and rear directions or up, down, left, and right directions for designating relative positions used in the following description are to help the understanding of the present invention and are based on directions shown in the drawings unless not specifically defined.

### [First Embodiment]

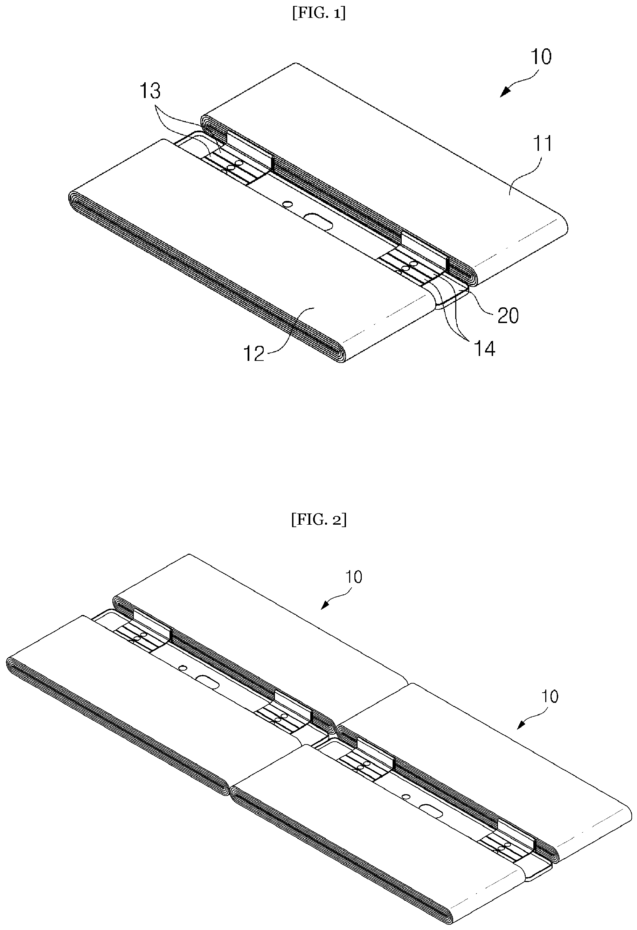

FIG. 1 is a view illustrating an example of a conventional jelly-roll type electrode structure 10.

In the conventional jelly-roll type electrode structure 10, one pair of jelly-roll type electrode assemblies 11 and 12, that is, a first jelly-roll type electrode assembly 11 and a second jelly-roll type electrode assembly 12, have a butterfly-shaped coupling structure (also referred to as a butterfly-shaped structure) with a current collector plate 20 interposed therebetween.

Here, an electrode structure is a structure formed by combining an electrode assembly and a current collector plate, and the definition of the electrode structure is equally applied in the following detailed description.

In addition, the first jelly-roll type electrode assembly 11 and the second jelly-roll type electrode assembly 12 are electrode assemblies 11 and 12 having a unidirectional structure in which a positive electrode tab 13 and a negative electrode tab 14 of each unit cell are disposed on the same side. In the jelly-roll type electrode assemblies 11 and 12, each of the positive electrode tabs 13 and the negative electrode tabs 14 face each other with the current collector plate 20 interposed therebetween.

The positive electrode tabs 13 and the negative electrode tabs 14 facing each other are coupled and electrically connected to a positive electrode terminal and a negative electrode terminal of the current collector plate 20, respectively, thereby completing the jelly-roll type electrode structure 10.

The conventional jelly-roll type electrode structure 10 has a disadvantage in that it is not free to increase the size of the jelly-roll type electrode assemblies 11 and 12 to increase capacity and enlarge the jelly-roll type electrode assemblies 11 and 12. This is because a dedicated winding device is required to wind the jelly-roll type electrode assemblies 11 and 12 to a predetermined size and is also because, when the size of the jelly-roll type electrode assemblies 11 and 12 increases, winding quality is degraded, and a jelly-roll is expanded or dented during use of a secondary battery, which adversely affects the safety of the secondary battery.

Due to such a limitation and disadvantage of the jelly-roll type electrode structure 10, now, instead of increasing the size of the jelly-roll type electrode assemblies 11 and 12 themselves, as shown in FIG. 2, a plurality of jelly-roll type electrode structures 10 having the same size have been connected to overcome the limitation and disadvantage.

However, such a method is very limited in responding to secondary batteries having various sizes and has disadvantages in that assemblability is lowered, and also a separate electric wire should be added.

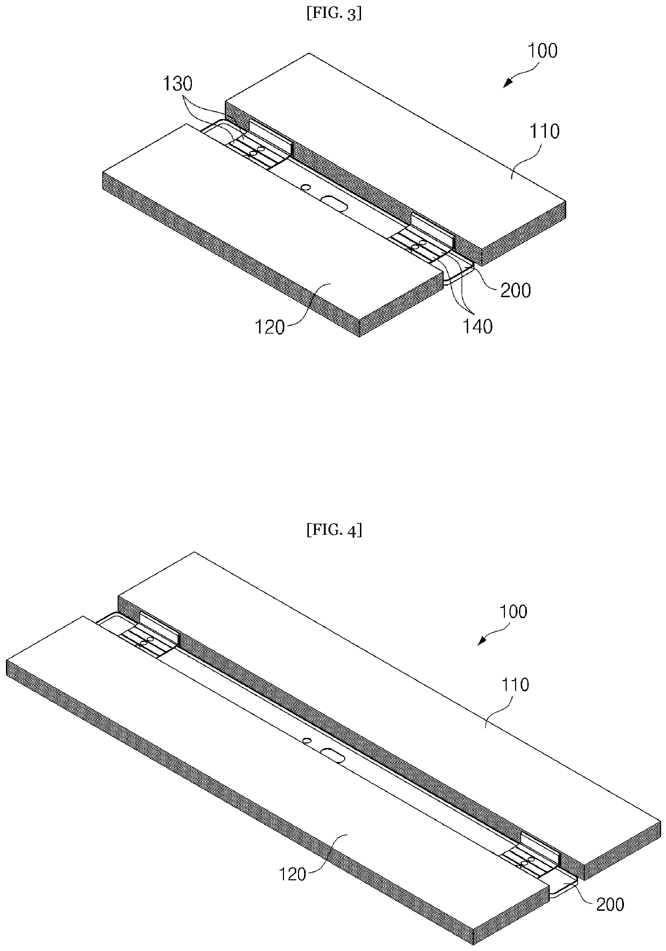

The present invention is directed to solving the disadvantages of the conventional jelly-roll type electrode structure 10, and a configuration according to the present invention is shown in FIG. 3.

The present invention relates to a stack type electrode structure 100. The stack type electrode structure 100 includes a first electrode assembly 110 (namely, first stack type electrode assembly) and a second electrode assembly 120 (namely, second stack type electrode assembly) in which unit cells including a positive electrode and a negative electrode with a separator interposed therebetween are stacked vertically and a positive electrode tab 130 and a negative electrode tab 140 of each unit cell are disposed on the same side, and a current collector plate 200.

The positive electrode tab 130 and the negative electrode tab 140 of the first electrode assembly 110 are disposed to respectively face the positive electrode tab 130 and the negative electrode tab 140 of the second stack type electrode assembly 120 with the current collector plate 200 interposed therebetween. The positive electrode tab 130 and the negative electrode tab 140 of each of the first and second electrode assemblies 110 and 120 are bonded to a positive electrode terminal 210 and a negative electrode terminal 220 of the current collector plate 200, respectively.

As described above, an electrode structure of the present invention is an electrode structure 100. In other words, in the present invention, instead of a conventional jelly-roll type electrode assembly, the first and second electrode assemblies 110 and 120, in which the unit cells including the separator interposed between the positive electrode and the negative electrode are stacked vertically, are used.

Accordingly, in the present invention, since a dedicated winding device is not required in manufacturing the first and second electrode assemblies 110 and 120, it is possible to flexibly respond to various sizes and form factors by being free from a size limitation.

In addition, the first and second electrode assemblies 110 and 120 have an advantage in that, even when the first and second electrode assemblies 110 and 120 are enlarged, it is easy to maintain a uniform shape and quality. Since the shape of the first and second electrode assemblies 110 and 120 is maintained well even during use of a secondary battery, excellent quality can be secured even in terms of safety.

FIG. 4 is a view illustrating an electrode structure 100 according to another embodiment of the present invention and illustrates a case in which sizes of first and second electrode assemblies 110 and 120 are approximately doubled as compared with the electrode structure 100 of FIG. 3.

As shown in FIG. 4, in the electrode structure 100 of the present invention, even when capacities of the first and second electrode assemblies 110 and 120 increase, the number of stack type electrode assemblies 110 and 120 is always two, and the capacities are adjusted using sizes of the first and second electrode assemblies 110 and 120 themselves. In other words, even when the number of stacked unit cells and/or sizes of the unit cells of the first and second electrode assemblies 110 and 120 are designed according to a plurality of specifications, the first and second stack type electrode assemblies 110 and 120 are always provided as one pair of stack type electrode assemblies 110 and 120.

This is because, as described above, a dedicated winding device is not required in manufacturing the first and second electrode assemblies 110 and 120, and thus there is almost no size limitation. Therefore, the electrode structure 100 of the present invention can actively respond to prismatic secondary batteries having various sizes and capacities required by the market.

Meanwhile, in the electrode structure 100 of the present invention as described above, the first and second electrode assemblies 110 and 120 are folded in half toward the current collector plate 200 with the positive electrode terminal 210 and the negative electrode terminal 220 as a center, and in such a folded state, a prismatic battery 1000 is formed.

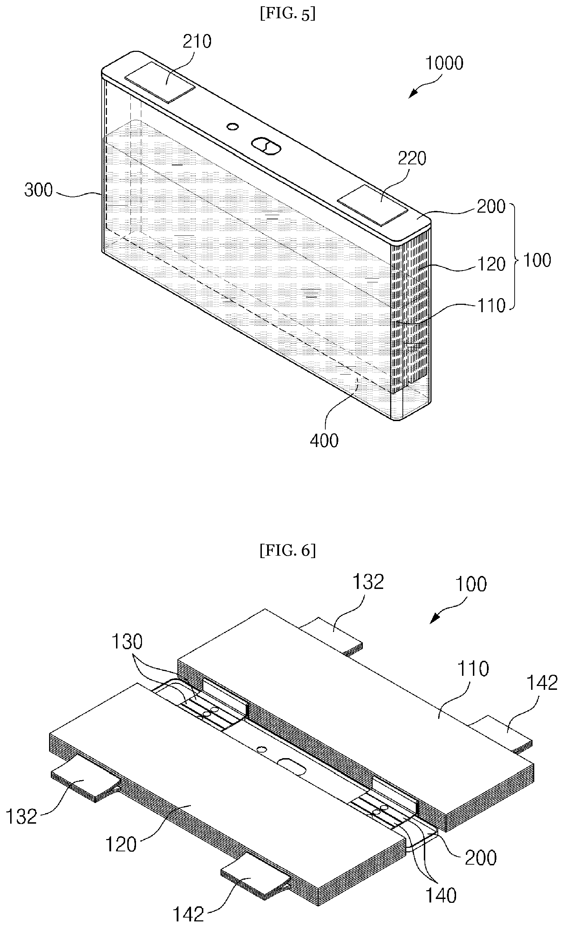

That is, as shown in FIG. 5, the prismatic battery 1000 of the present invention includes the electrode structure 100 folded in half, a prismatic battery housing 300 having a hexahedral shape of which one surface is formed as an open surface to accommodate the electrode structure 100, and an electrolyte 400 with which the prismatic battery housing 300 is filled.

Here, the electrode structure 100 is accommodated in the prismatic battery housing 300, and the prismatic battery 1000 is completed by sealing a space between the current collector plate 200 and the open surface of the prismatic battery housing 300. For reference, the electrolyte 400, which is a component of the prismatic battery 1000, is generally injected into the prismatic battery housing 300 after the space between the current collector plate 200 and the open surface of the prismatic battery housing 300 is sealed.

### [Second Embodiment]

FIG. 6 is a view illustrating an electrode structure 100 according to another embodiment of the present invention.

A prismatic battery 1000 of a second embodiment relates to a unidirectional secondary battery in which both a positive electrode terminal 210 and a negative electrode terminal 220 are disposed on one surface of a prismatic battery housing 300, that is, on an upper surface in the illustrated example (refer to FIG. 5). Correspondingly, a positive electrode tab 130 and a negative electrode tab 140 are also disposed on an upper portion of first and second electrode assemblies 110 and 120.

Furthermore, in the second embodiment of the present invention, the electrode structure 100 further includes a dummy positive electrode tab 132 and a dummy negative electrode tab 142 which are electrically separated from the positive electrode terminal 210 and the negative electrode terminal 220 of a current collector plate 200. The dummy positive electrode tab 132 and the dummy negative electrode tab 142 are formed at an uncoated portion facing an uncoated portion at which the positive electrode tab 130 and the negative electrode tab 140 are formed. Accordingly, in the second embodiment, based on the drawing, the positive electrode tab 130 and the negative electrode tab 140 are disposed at an upper end of the first and second electrode assemblies 110 and 120, and the dummy positive electrode tab 132 and the dummy negative electrode tab 142 are disposed at a lower end thereof.

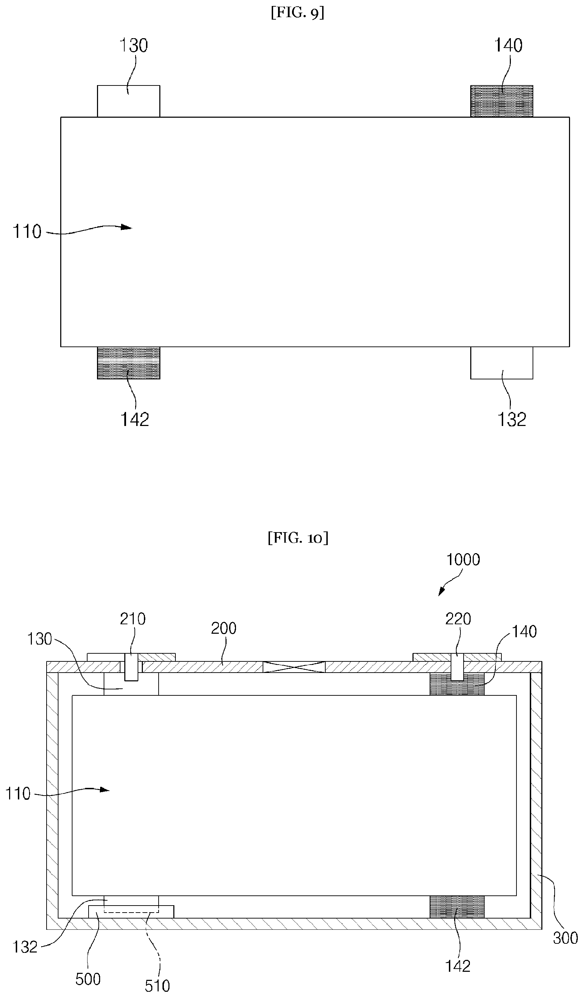

FIG. 10 is a view illustrating a support structure of the first and second electrode assemblies 110 and 120 in the prismatic battery 1000. Although only the first electrode assembly 110 is shown in FIG. 10, the same support structure is also applied to the second electrode assembly 120. As shown in the drawing, the positive electrode tab 130 and the negative electrode tab 140 are fixed to the positive electrode terminal 210 and the negative electrode terminal 220 of the current collector plate 200 through welding, and the dummy positive electrode tab 132 and the dummy negative electrode tab 142 are fixed to a lower surface of the prismatic battery housing 300.

As described above, in the prismatic battery 1000 according to the second embodiment of the present invention, both upper and lower portions of the first and second electrode assemblies 110 and 120 are fixed to the prismatic battery housing 300. More specifically, the positive electrode tab 130, the negative electrode tab 140, the dummy positive electrode tab 132, and the dummy negative electrode tab 142 fix the first and second electrode assemblies 110 and 120 to the prismatic battery housing 300 through a four-point support structure. The four-point support structure is a structure that exerts strong support against external disturbances (shock, vibration, or the like). The first and second electrode assemblies 110 and 120 supported at four points are prevented from slipping to prevent various problems such as a short circuit due to electrical contact or tearing of the positive electrode tab 130 and the negative electrode tab 140, thereby considerably improving the safety of the prismatic battery 1000.

In addition, since the dummy positive electrode tab 132 and the dummy negative electrode tab 142 are formed integrally with a positive electrode and a negative electrode of the first and second electrode assemblies 110 and 120, when the prismatic battery housing 300 has a polarity, at least one of the dummy positive electrode tab 132 and the dummy negative electrode tab 142 needs to be electrically insulated from the prismatic battery housing 300 in order to prevent an internal short circuit. For example, when the prismatic battery housing 300 is electrically positive, the dummy negative electrode tab 142 should be electrically insulated from the prismatic battery housing 300, and on the contrary, when the prismatic battery housing 300 is negative, the dummy positive electrode tab 132 should be insulated from the prismatic battery housing 300. When the prismatic battery housing 300 needs to be electrically neutral, both the dummy positive electrode tab 132 and the dummy negative electrode tab 142 need to be insulated from the prismatic battery housing 300.

FIG. 10 illustrates an example of a case in which the prismatic battery housing 300 is electrically negative, for example, is grounded. The dummy positive electrode tab 132 is fixed to an insulator 500 installed on an inner surface of the prismatic battery housing 300, and the dummy positive electrode tab 132 fixed to the prismatic battery housing 300 through the insulator 500 is electrically separated from the prismatic battery housing 300. For example, the insulator 500 may include a tab insertion groove 510, and the dummy positive electrode tab 132 may be fixed by being inserted into the tab insertion groove 510 of the insulator 500 and pressed.

In addition, the dummy negative electrode tab 142 may also be fixed to the prismatic battery housing 300 using the insulator 500, but since the dummy negative electrode tab 142 does not need to be insulated from the prismatic battery housing 300 that is electrically negative, the dummy negative electrode tab 142 may be welded and fixed directly to the inner surface of the prismatic battery housing 300.

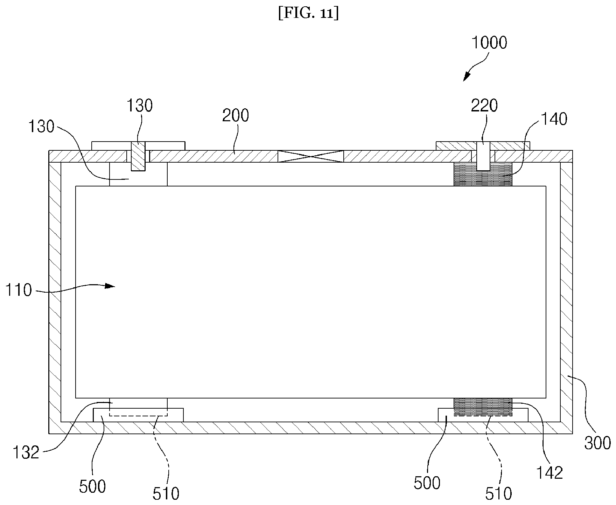

FIG. 11 illustrates a case in which the prismatic battery housing 300 is electrically neutral. Both the dummy positive electrode tab 132 and the dummy negative electrode tab 142 are fixed to the insulator 500 installed on the inner surface of the prismatic battery housing 300. Even in FIG. 11, the dummy positive electrode tab 132 and the dummy negative electrode tab 142 may be inserted into and fixed to the tab insertion groove 510 of the insulator 500.

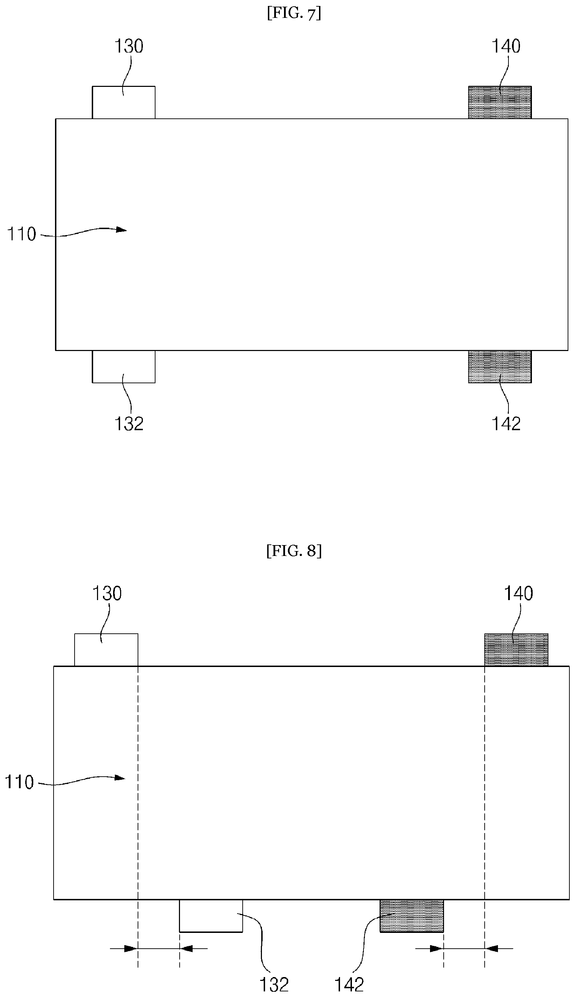

Meanwhile, FIGS. 7 to 9 are views illustrating various arrangement structures of the dummy positive electrode tab 132 and the dummy negative electrode tab 142. It can be confirmed that there may be various arrangement relationships of the dummy positive electrode tab 132 and the dummy negative electrode tab 142 with respect to the positive electrode tab 130 and the negative electrode tab 140, and even in various arrangement structures, a four-point support structure of the electrode assemblies 110 and 120 remains the same. For reference, although FIGS. 7 to 9 illustrate the first electrode assembly 110, of course, the same arrangement may be applied to the second electrode assembly 120.

First, referring to FIG. 7, a pair of the positive electrode tab 130 and the dummy positive electrode tab 132 and a pair of the negative electrode tab 140 and the dummy negative electrode tab 142 may each be aligned to be positioned on a straight line that crosses one surface and a facing surface of the first electrode assembly 110, that is, a straight line in a height direction of the prismatic battery housing 300. That is, the dummy positive electrode tab 132 directly faces the positive electrode tab 130, and the dummy negative electrode tab 142 also directly faces the negative electrode tab 140.

As compared with the first electrode assembly 110 of FIG. 7, in the first electrode assembly 110 of FIG. 8, a pair of the positive electrode tab 130 and the dummy positive electrode tab 132 and a pair of the negative electrode tab 140 and the dummy negative electrode tab 142 are each disposed and offset to be misaligned with respect to a straight line that vertically crosses the first electrode assembly 110. That is, the first electrode assembly 110 of FIG. 8 has a facing structure in which the dummy positive electrode tab 132 and the dummy negative electrode tab 142 are misaligned with the positive electrode tab 130 and the negative electrode tab 140, respectively. By breaking a vertical symmetry structure of a four-point support, a natural frequency is changed, and accordingly, it is possible to respond to various types of vibration.

FIG. 9 is a modification of FIG. 8, a pair of the positive electrode tab 130 and the dummy negative electrode tab 142 and a pair of the negative electrode tab 140 and the dummy positive electrode tab 132 are each aligned to be positioned on a straight line that crosses one surface and a facing surface of the first electrode assembly 110. That is, the dummy negative electrode tab 142 has a structure facing the positive electrode tab 130, and the dummy positive electrode tab 132 has a structure facing the negative electrode tab 140. FIG. 9 shows that types (polarity) of t the dummy positive electrode tab 132 and the dummy negative electrode tab 142 respectively facing the positive electrode tab 130 and negative electrode tab 140 are not limited to the embodiment of FIG. 7.

In addition, the prismatic battery 100 according to the present invention can be used in various devices, such as an electric vehicle (EV).

In the above, the present invention has been described in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of them at the time of filing the present application.

### DESCRIPTION OF REFERENCE NUMERALS

- 100: electrode structure
- 110: first electrode assembly
- 120: second electrode assembly
- 130: positive electrode tab
- 132: dummy positive electrode tab
- 140: negative electrode tab
- 142: dummy negative electrode tab
- 200: current collector plate
- 210: positive electrode terminal
- 220: negative electrode terminal
- 300: prismatic battery housing
- 400: electrolyte
- 500: insulator
- 510: tab insertion groove
- 1000: prismatic battery

### INDUSTRIAL AVAILABILITY

The present invention is is useful for improving the safety of prismatic secondary batteries.

In view of the foregoing disclosure, the present invention may be implemented in accordance with the following itemized embodiment examples.
Item 1 An electrode structure comprising:
   a first electrode assembly;
   a second electrode assembly; and
   a current collector plate including a positive electrode terminal and a negative electrode terminal, wherein
   each of the first electrode assembly and the second electrode assembly includes a plurality of unit cells, each of the plurality of unit cells including a positive electrode and a negative electrode, and a separator between the positive electrode and the negative electrode,
   wherein the positive electrode includes a positive electrode tab and a dummy positive electrode tab, and the negative electrode includes a negative electrode tab and a dummy negative electrode tab,
   wherein the positive electrode tabs and negative electrode tabs are disposed on a first side of the plurality of unit cells,
   the positive electrodes of the first electrode assembly and the second electrode assembly are electrically connected to the positive electrode terminals, and the negative electrodes of the first electrode assembly and the second electrode assembly are electrically connected to the negative electrode terminals, wherein the dummy positive electrode tab and the dummy negative electrode tab are disposed on a side other than a first side of the plurality of unit cells.
Item 2 The electrode structure of item 1, wherein the number of unit cells of the first electrode assembly is the same as the number of unit cells of the second electrode assembly.
Item 3 The electrode structure of item 1, wherein the first electrode assembly and the second electrode assembly are folded toward the current collector plate with the positive electrode terminal and the negative electrode terminal as a center.
Item 3 The electrode structure of item 1, wherein the first electrode assembly and the second electrode assembly further comprise a half cell having a positive electrode or a negative electrode above a separator.
Item 5 A prismatic battery comprising:
   an electrode structure according to item 3;
   a prismatic battery housing having an opening to receive the electrode structure;
   and an electrolyte,
   wherein the current collector plate seals the opening in the prismatic battery housing.
Item 6 The prismatic battery of item 5, wherein the dummy positive electrode tab and the dummy negative electrode tab are electrically insulated with respect to the positive electrode and negative electrode terminals of the current collector plate.
Item 7 The prismatic battery of item 5, wherein the dummy positive electrode tab and the dummy negative electrode tab are fixed to the prismatic battery housing to support the first and second electrode assemblies.
Item 8 The prismatic battery of item 5, wherein both the dummy positive electrode tab and the dummy negative electrode tab are disposed on opposite sides of the first side of the plurality of unit cells.
Item 9 The prismatic battery of item 5, wherein the dummy positive electrode tab and the dummy negative electrode tab are fixed to the inner surface of the prismatic battery housing.
Item 10 The prismatic battery of item 8,wherein a pair of the positive electrode tab and the dummy positive electrode tab and a pair of the negative electrode tab and the dummy negative electrode tab are each aligned to be positioned on the straight line in the height direction of the prismatic battery housing.
Item 11 The prismatic battery of item 8, wherein a pair of the positive electrode tab and the dummy positive electrode tab and a pair of the negative electrode tab and the dummy negative electrode tab are each disposed to be misaligned with respect to a straight line in a height direction of the prismatic battery housing.
Item 12 The prismatic battery of item 11, wherein a pair of the positive electrode tab and the dummy negative electrode tab and a pair of the negative electrode tab and the dummy positive electrode tab are each aligned to be positioned on the straight line in the height direction of the prismatic battery housing.
Item 13 The prismatic battery of item 5, wherein any one dummy tab of the dummy positive tab and the dummy negative tab is electrically insulated from the prismatic battery housing.
Item 14 The prismatic battery of item 13, wherein any one dummy tab electrically insulated from the prismatic battery housing has a polarity opposite to that of the prismatic battery housing.
Item 15 The prismatic battery of item 13, wherein any one dummy tab electrically insulated from the prismatic battery housing is fixed to an insulator installed on an inner surface of the prismatic battery housing.
Item 16 The prismatic battery of item 15, wherein:
   the insulator includes a tab insertion groove; and
   any one dummy tab electrically insulated from the prismatic battery housing is inserted into and fixed to the tab insertion groove.
Item 17 The prismatic battery of item 13, wherein a dummy tab that is not electrically insulated from the prismatic battery housing is welded to an inner surface of the prismatic battery housing.
Item 18 The prismatic battery of item 5, wherein:
   a polarity of the prismatic battery housing is neutral; and
   the dummy positive electrode tab and the dummy negative electrode tab are each electrically insulated from the prismatic battery housing.
Item 19 The prismatic battery of item 18, wherein the dummy positive electrode tab and the dummy negative electrode tab are fixed to an insulator installed on an inner surface of the prismatic battery housing.
Item 20 The prismatic battery of item 19, wherein:
   the insulator includes a tab insertion groove; and
   the dummy positive electrode tab and the dummy negative electrode tab are each inserted into and fixed to the tab insertion groove.
Item 21 A device comprising a prismatic battery according to item 5, wherein the device is an electric vehicle.

## Claims

1. An electrode structure (100) comprising:
a first electrode assembly (110);
a second electrode assembly (120); and
a plate (200) including a positive electrode terminal (210) and a negative electrode terminal (220), wherein
each of the first electrode assembly (110) and the second electrode assembly (120) includes a plurality of unit cells, each of the plurality of unit cells including a positive electrode and a negative electrode, and a separator between the positive electrode and the negative electrode,
wherein the positive electrode includes a positive electrode tab (130), and the negative electrode includes a negative electrode tab (140),
wherein the positive electrode tabs (130) and negative electrode tabs (140) are disposed on a first side of the plurality of unit cells,
the positive electrodes tabs (130) of the first electrode assembly (110) and the second electrode assembly (120) are bonded to the positive electrode terminals (210), and the negative electrodes tabs (140) of the first electrode assembly (110) and the second electrode assembly (120) are bonded to the negative electrode terminals (220).

2. The electrode structure (100) of claim 1, wherein plate (200) is a sealing plate (200) for sealing a space between plate (200) and the open surface of a prismatic battery housing (300) to receive the electrode structure (100).

3. The electrode structure (100) of claim 1 or 2, wherein the number of unit cells of the first electrode assembly (110) is the same as the number of unit cells of the second electrode assembly (120).

4. The electrode structure (100) of any one of claims 1 to 3, wherein the first electrode assembly (110) and the second electrode assembly (120) are folded toward the plate (200) with the positive electrode terminal (210) and the negative electrode terminal (220) as a center.

5. The electrode structure (100) of any one of claims 1 to 4, wherein the first electrode assembly (110) and the second electrode assembly (120) further comprise a half cell having a positive electrode or a negative electrode above a separator.

6. A prismatic battery (1000) comprising:
an electrode structure (100) according to claim 4 or claim 5 when dependent on claim 4;
a prismatic battery housing (300) having an opening to receive the electrode structure (100); and
an electrolyte (400),
wherein the plate (200) seals the opening in the prismatic battery housing (300).
